Europäisches Patentamt

European Patent Office

Office européen des brevets

(19)

(11) Veröffentlichungsnummer: **0 151 810**
**B1**

(12)

# EUROPÄISCHE PATENTSCHRIFT

(45) Veröffentlichungstag der Patentschrifft:
21.03.90

(21) Anmeldenummer: 84116478.3

(22) Anmeldetag: 28.12.84

(51) Int. Cl. ⁵: **G 06 F 11/00**

(54) **Verfahren und Schaltungsanordnung zum Prüfen eines Programms in Datenverarbeitungsanlagen.**

(30) Priorität: 10.02.84 DE 3404782

(43) Veröffentlichungstag der Anmeldung:
21.08.85 Patentblatt 85/34

(45) Bekanntmachung des Hinweises auf die Patenterteilung:
21.03.90 Patentblatt 90/12

(84) Bennante Vertragsstaaten:
DE FR GB IT NL SE

(56) Entgegenhaltungen:
EP-A-0 017 586
DE-A-1 910 582
DE-A-1 910 582
US-A-3 427 443
US-A-4 249 250

PATENTS ABSTRACTS OF JAPAN, Band 6, Nr. 88 (P-118) 966 , 26. Mai 1982; & JP - A - 57 25 051 (FUJITSU K.K.) 09-02-1982

PATENTS ABSTRACTS OF JAPAN, Band 6, Nr. 112 (P-124) 990 , 23. Juni 1982; & JP - A - 57 41 748 (NIPPON DENKI K.K.) 09-03-1982

(73) Patentinhaber: **Nixdorf Computer Aktiengesellschaft**
**Fürstenallee 7**
**D-4790 Paderborn (DE)**

(72) Erfinder: **Nowak, Gerhard**
**Humperdinckweg 12**
**D-4790 Paderborn (DE)**

(74) Vertreter: **Schaumburg, Thoenes & Englaender**
**Mauerkircherstrasse 31 Postfach 86 07 48**
**D-8000 München 80 (DE)**

**Beschreibung**

Die Erfindung betrifft ein Verfahren zum Prüfen eines Programms in Datenverarbeitungsanlagen, in denen ein Systemprogramm das Abarbeiten des zu prüfenden Programms steuert, das zu prüfende Programm nach seinem Laden in den Arbeitsspeicher der Datenverarbeitungsanlage durch Einschreiben einer Ausgangsinformation mit richtigen Paritätszeichen in die von ihm zu benutzenden Speicherzellen eine Normierung des Arbeitsspeichers veranlaßt und das Systemprogramm bei Auftreten eines Paritätsfehlers das Unterbrechen des zu prüfenden Programms veranlaßt. Ferner betrifft die Erfindung eine Schaltungsanordnung zur Durchführung des Verfahrens.

Es ist bereits bekannt, in Datenverarbeitungsanlagen zur Datensicherung eine Paritätskontrolle durchzuführen. Dabei wird einer einheitlich langen Folge von Informationszeichen ein zusätzliches Zeichen hinzugefügt, dessen Wert nach einer vorgegebenen Vereinbarung so gewählt ist, daß mit ihm die Anzahl der Informationszeichen mit einem vorgegebenen Wert über die gesamte Einheit der Folge von Informationszeichen stets einen geraden oder stets einen ungeraden Wert erreicht. Bei der Paritätskontrolle wird dann ein bei einer Zeichenfolge vorhandenes Paritätszeichen mit einem nach gleichem Verfahren neu gebildeten Paritätszeichen verglichen. Stimmen die beiden Paritätszeichen nicht überein, so liegt ein Paritätsfehler vor, was bedeutet, daß ein oder mehrere Informationszeichen durch Fehlereinflüsse verfälscht wurden.

Bei Auftreten eines solchen Paritätsfehlers kann das Systemprogramm einer Datenverarbeitungsanlage eine Fehlerroutine einleiten bzw. die zentrale Recheneinheit so ansteuern, daß diese den Ablauf eines gerade abzuarbeitenden Programms unterbricht. Hierbei kann das Programm z. B. auf einer definierten Adresse stehen bleiben.

Aus der DE-A-1 910 582 ist weiterhin ein System bekannt, bei dem invertierte Prüfbits in eine bestimmte Speicherzelle für die Programmprüfung eingegeben werden. Die Speicherzelle kann an Hand der falschen Parität wieder aufgefunden und das Programm an dieser Stelle angehalten oder Prüfsynchronisiersignale erzeugt werden. Das System dient somit zur Unterstützung beim Prüfvorgang, die Prüfung selbst, d. h. das Erkennen von Programmfehlern, kann von ihm nicht geleistet werden.

Ein besonderer Anwendungsfall der Paritätskontrolle ist aber das Prüfen von Programmen in einer Datenverarbeitungsanlage auf Programmfehler. Eine Datenverarbeitungsanlage enthält ein Systemprogramm, welches ihre grundsätzlichen Betriebsabläufe, also die Arbeitsweise ihrer Funktionseinheiten, steuert. Ferner können unterschiedliche Anwenderprogramme vorgesehen oder eingegeben werden, die den jeweiligen Verwendungszweck der Datenverarbeitungsanlage erfüllen und somit Anwenderaufgaben lösen.

Solche Anwenderprogramme müssen in der Datenverarbeitungsanlage unter Steuerung durch das Systemprogramm auf Programmfehler überprüft werden, um zu verhindern, daß Fehlfunktionen in der Abarbeitung des jeweiligen Anwenderprogramms auftreten.

Ein zu prüfendes Programm veranlaßt vor seiner eigentlichen Abarbeitung in dem Arbeitsspeicher der Datenverarbeitungsanlage ein Normieren aller von ihm zu benutzenden Speicherzellen. Dies bedeutet, daß in diese Speicherzellen eine mit richtigem Paritätszeichen versehene Anfangsinformation eingeschrieben wird, wodurch verhindert wird, daß die Speicherzellen nach dem Einschalten der Datenverarbeitungsanlage noch den angenommenen Zufallswert oder aus zuvor abgearbeiteten Programmen noch Informationen enthalten, die für das Abarbeiten des zu prüfenden Programms nicht relevant sind. Wenn das zu prüfende Programm einen Programmfehler enthält, so werden aber die Speicherzellen des Arbeitsspeichers nicht ordnungsgemäß normiert. Wenn im Laufe der Abarbeitung des Programms dann ein Lesezugriff zu einer nicht normierten Speicherzelle erfolgt, so werden falsche Informationen ausgelesen, der sie verursachende Programmfehler jedoch nicht sofort erkannt. Da Programmfehler dieser Art am häufigsten sind, ihre Analyse jedoch dadurch erschwert ist, daß sie nicht sofort erkannt werden können, besteht der Bedarf für ein Prüfverfahren, welches diesen Nachteil vermeidet.

Es ist demgemäß Aufgabe der Erfindung, ein Verfahren zum Prüfen eines Programms anzugeben, welches beim Abarbeiten des Programms das sofortige Feststellen von Programmfehlern möglich macht.

Ein Verfahren eingangs genannter Art ist zur Lösung dieser Aufgabe erfindungsgemäß derart ausgebildet, daß vor dem Normieren zumindest in die von dem zu prüfenden Programm zu benutzenden Speicherzellen Informationen mit falschen Paritätszeichen eingeschrieben werden, so daß beim Abarbeiten des Programms ein Lesezugriff zu einer dieser Speicherzellen, die nicht normiert ist, zur Feststellung eines Programmfehlers führt.

Wenn in dieser Weise vorgegangen wird, so können die Speicherzellen des von dem zu prüfenden Programm zu benutzenden Arbeitsspeichers keinen Zufallswert oder nicht mehr relevante paritätsrichtige Informationen enthalten, wenn sie nachfolgend durch einen Programmfehler nicht ordnungsgemäß normiert werden. Ein Lesezugriff auf eine solche Speicherzelle hat dann das Erkennen einer paritätsfalschen Information zur Folge, wodurch unmittelbar eine Fehlerroutine oder das Unterbrechen des zu prüfenden Programms veranlaßt werden kann. Somit wird also ein in einer fehlerhaften Normierung sich äußernder Programmfehler augenblicklich erkannt, so daß entsprechend sofortige Maßnahmen zur Analyse und Behebung dieses Fehlers möglich sind.

Eine Weiterbildung des Verfahrens zeichnet sich dadurch aus, daß ein den Start des zu prüfenden Programms veranlassender Befehl das Einschreiben der paritätsfalschen Informationen mit umfaßt. Auf diese Weise erfolgt das Einschreiben der paritätsfalschen Informationen stets automatisch vor dem Normieren. Hierbei kann der Startbefehl für das zu prüfende Programm zunächst durch sein Auftreten die Zentraleinheit der Datenverarbeitungsanlage dazu veranlassen, gesteuert durch das Systemprogramm die paritätsfalschen Informationen einzuschreiben, wonach der Startbefehl dann erst an das zu prüfende Programm weitergeleitet wird. Der eigentliche Aufruf des zu prüfenden Programms erfolgt dabei also durch die Zentraleinheit.

Eine andere Möglichkeit zum Auslösen des Einschreibevorgangs der paritätsfalschen Informationen ergibt sich für Datenverarbeitungsanlagen, in denen bestimmte Speicherbereiche einem Programm dynamisch zugeordnet und wieder freigegeben werden. Hierbei kann das Verfahren derart durchgeführt werden, daß als Kriterium für das Einschreiben der paritätsfalschen Informationen die dynamische Freigabe des jeweiligen Speicherbereichs verwendet wird. Auch hierbei erfolgt das Einschreiben der paritätsfalschen Informationen automatisch, ohne daß besondere, vom Anwender zu treffende Maßnahmen erforderlich sind.

Eine Schaltungsanordnung für eine Datenverarbeitungsanlage, die eine Paritätskontrolle mit zugehörigen Funktionseinheiten enthält, ist in weiterer Ausbildung des Erfindungsgedankens derart aufgebaut, daß der das Paritätszeichen abgebende Ausgang des Paritätsgenerators einen Eingang eines EXKLUSIV-ODER-Gliedes ansteuert, dessen anderer Eingang durch eine Torschaltung angesteuert ist, deren zwei Ausgangszustände von der Zentraleinheit im Sinne paritätsrichtigen oder paritätsfalschen Einschreibens in den Arbeitsspeicher ein nicht invertierendes oder ein invertierendes Durchschalten des Paritätszeichens durch das EXKLUSIV-ODER-Glied bewirken.

Eine in dieser Weise aufgebaute Schaltungsanordnung zeichnet sich durch größtmögliche Einfachheit aus, so das sie ohne weiteres auch in bereits vorhandenen Datenverarbeitungsanlagen als Ergänzung der Paritätskontrolle eingebaut werden kann.

Ein Ausführungsbeispiel der Erfindung wird im folgenden anhand der Figuren beschrieben. Es zeigen:

Fig. 1  Eine schematische Übersicht eines Teils einer nach der Erfindung arbeitenden Datenverarbeitungsanlage und

Fig. 2  eine tabellarische Darstellung der Arbeitsweise einer in der Anordnung nach Fig. 1 verwendeten Einzelschaltung.

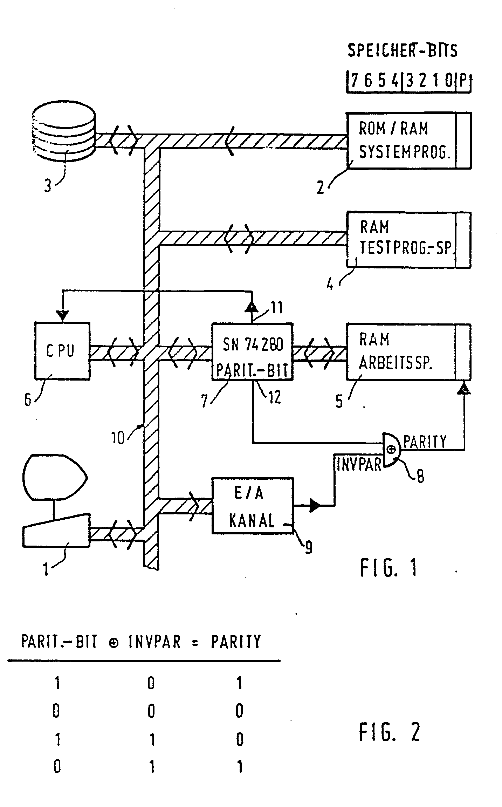

In Fig. 1 ist ein Teil einer Datenverarbeitungsanlage dargestellt, deren Funktionseinheiten über eine Sammelleitungsanordnung 10 (Bus) miteinander kommunizieren können. An die Sammelleitungsanordnung 10 ist eine Systemkonsole 1 angeschaltet, über die der Anwender Steuerbefehle eingeben kann bzw. abzuarbeitende Programme auswählt. Gleichzeitig werden auf der Systemkonsole 1 die Ergebnisse der so ausgelösten Arbeitsabläufe angezeigt. An die Sammelleitungsanordnung 10 ist ferner eine Zentraleinheit 6 angeschlossen, die die Programmabläufe der Datenverarbeitungsanlage steuert. Das Systemprogramm befindet sich in einem Systemprogrammspeicher 2, der ein Festwertspeicher oder ein Speicher mit wahlfreiem Zugriff (ROM/RAM) sein kann. Außerdem ist ein Magnetplattenspeicher 3 an die Sammelleitungsanordnung 10 angeschlossen, der mehrere Anwenderprogramme enthalten kann, die jeweils zu Prüfzwecken in einen Testprogrammspeicher 4 eingegeben werden können, welcher gleichfalls an die Sammelleitungsanordnung 10 angeschlossen ist. Dieser Speicher ist entsprechend ein Speicher mit wahlfreiem Zugriff (RAM).

Der Arbeitsspeicher 5, gleichfalls ein Speicher mit wahlfreiem Zugriff (RAM), ist mit der Sammelleitungsanordnung 10 über einen Paritätsgenerator/Paritätsprüfer 7 z. B. vom Typ SN 74280 verbunden. Der Paritätsgenerator 7 ist über einen ein Steuersignal abgebenden Steuerausgang 11 mit der Zentraleinheit 6 verbunden. Außerdem gibt er an einem Paritätszeichenausgang 12 ein Paritätszeichen ab, welches über ein EXKLUSIV-ODERGlied 8 dem Arbeitsspeicher 5 zugeführt wird. Das EXKLUSIV-ODER-Glied 8 wird an seinem zweiten Eingang durch das Ausgangssignal eines Eingabe-Ausgabe-Kanals 9 gesteuert, welcher gleichfalls mit der Sammelleitungsanordnung 10 verbunden ist und eine Torfunktion enthält.

Die Speicher 2, 4 und 5 sind in Fig. 1 schematisch mit einer Breite dargestellt, die der Länge zu speichernder achtstelliger Datenworte entspricht. Zusätzlich ist jeweils eine weitere Speicherstelle angedeutet, die für das Speichern eines Paritätszeichens vorgesehen ist. Dieses ist bei der in Fig. 1 oberhalb der Speicher 2, 4 und 5 vorgesehenen Wortdarstellung mit P bezeichnet.

Der bei einem Verfahren nach der Erfindung vorgesehene und vor der Normierung des Arbeitsspeichers 5 durchzuführende Verfahrensschritt wird dadurch eingeleitet, daß an der Systemkonsole 1 eine Steuertaste betätigt wird, die einen Befehl "Programm laden" erzeugt, welcher über die Zentraleinheit 6 das Systemprogramm im Systemprogrammspeicher 2 veranlaßt, ein zu prüfendes Programm von dem Magnetplattenspeicher 3 in den Testprogrammspeicher 4 zu laden. Es ist auch möglich, ein zu prüfendes Programm direkt von der Systemkonsole 1 aus oder von anderen Datenquellen aus in den Testprogrammspeicher 4 zu laden.

Befindet sich das zu prüfende Programm in dem Testprogrammspeicher 4, so kann es durch Abgabe eines Befehls "Programmstart" gestartet werden. Dieser Befehl wird gleichfalls an der Systemkonsole 1 eingegeben. Wenn er in der Zentraleinheit 6 erkannt ist, bewirkt diese zunächst das Einschreiben paritätsfalscher Informationen in den Arbeitsspeicher 5, bevor der Befehl "Programmstart" an das zu prüfende Programm im Testprogrammspeicher 4 weitergeleitet wird. Das Einschreiben der paritätsfalschen Informationen in den Arbeitsspeicher 5 erfolgt über den Paritätsgenerator 7. Zu jedem ihm zugeführten Datenwort erzeugt der Paritätsgenerator 7 an seinem Paritätszeichenausgang 12 ein Paritätsbit, welches dem ersten Eingang des EXKLUSIV-ODER-Gliedes 8 zugeführt wird.

Die Zentraleinheit 6 steuert nun den Eingabe-AusgabeKanal 9, der eine Torfunktion hat, abhängig von der Kontrolle durch das Systemprogramm derart, daß sein Ausgangssignal den Binärwert 0 oder 1 annehmen kann. Es sei vorausgesetzt, daß ein Ausgangssignal mit dem Binärwert 1 das Invertieren des Paritätsbits veranlassen soll, welches vom Paritätsgenerator 7 abgegeben wird. Dieses Invertieren erfolgt durch das EXKLUSIV-ODER-Glied 8 in noch zu beschreibender Weise. Die Zentraleinheit 6 kann also, veranlaßt durch den Befehl "Programmstart", das Einschreiben paritätsfalscher Informationen in den Arbeitsspeicher 5 veranlassen.

Wird der auf diese Weise mit paritätsfalschen Informationen geladene Arbeitsspeicher 5 durch das zu prüfende Programm normiert und dann im Zuge des Abarbeitens des zu prüfenden Programms ausgelesen, so werden die ausgelesenen Datenworte dem Paritätsgenerator 7 zugeführt, der dann als Paritätsprüfer arbeitet. Erkennt er eine paritätsfalsche Information und damit einen Programmfehler, so gibt er an seinem Steuerausgang 11 ein Interrupt-Signal ab, welches der Zentraleinheit 6 zugeführt wird und dort eine Stehenbleiben auf einer definierten Adresse des zu prüfenden Programms veranlaßt oder eine Fehlermelderoutine in an sich bekannter Weise einleitet.

Die Arbeitsweise des EXKLUSIV-ODER-Gliedes 8 wird anhand der in Fig. 2 dargestellten Tabelle verständlich. Zum Einschreiben paritätsrichtiger Informationen gibt der Eingabe-Ausgabe-Kanal 9 ein Signal INVPAR mit dem Binärwert 0 ab. Erhält dieses Signal den Binärwert 1, so ist eine paritätsfalsche Information in den Arbeitsspeicher 5 einzuschreiben. Das jeweils richtige oder falsche Paritätszeichen PARITY am Ausgang des EXKLUSIV-ODER-Gliedes 8 hat dann entsprechend den einen oder anderen Binärwert, wie er in der Tabelle nach Fig. 2 dargestellt ist. Diese Tabelle zeigt die verschiedenen möglichen Kombinationen des Binärwertes des Paritätszeichens, welches vom Paritätszeichenausgang 12 des Paritätsgenerators 7 abgegeben wird, und des Signals INVPAR, welches das falsche oder richtige Paritätszeichen am Ausgang des EXKLUSIV-ODER-Gliedes 8 veranlaßt.

**Patentansprüche**

1. Verfahren zum Prüfen eines Programms in Datenverarbeitungsanlagen, in denen ein Systemprogramm das Abarbeiten des zu prüfenden Programms steuert, das zu prüfende Programm nach seinem Laden in den Arbeitsspeicher der Datenverarbeitungsanlage durch Einschreiben einer Ausgangsinformation mit richtigen Paritätszeichen in die von ihm zu benutzenden Speicherzellen eine Normierung des Arbeitsspeichers veranlaßt und das Systemprogramm bei Auftreten eines Paritätsfehlers das Unterbrechen des zu prüfenden Programms veranlaßt, dadurch gekennzeichnet, daß vor dem Normieren zumindest in die von dem zu prüfenden Programm zu benutzenden Speicherzellen Informationen mit falschen Paritätszeichen eingeschrieben werden, so daß beim Abarbeiten des Programms ein Lesezugriff zu einer dieser Speicherzellen, die nicht normiert ist, zur Feststellung eines Programmfehlers führt.

2. Verfahren nach Anspruch 1, dadurch gekennzeichnet, daß ein den Start des zu prüfenden Programms veranlassender Befehl das Einschreiben der paritätsfalschen Informationen mit umfaßt.

3. Verfahren nach Anspruch 1 für Datenverarbeitungsanlagen, in denen bestimmte Speicherbereiche einem Programm dynamisch zugeordnet und wieder freigegeben werden, dadurch gekennzeichnet, daß als Kriterium für das Einschreiben der paritätsfalschen Informationen die dynamische Freigabe des jeweiligen Speicherbereichs verwendet wird.

4. Schaltungsanordnung für eine Datenverarbeitungsanlage zur Durchführung des Verfahrens nach einem der Ansprüche 1 bis 3, mit einem Paritätsgenerator und Paritätsprüfer, der dem Arbeitsspeicher der Datenverarbeitungsanlage vorgeschaltet ist, ein jedem in den Arbeitsspeicher einzuspeichernden Datenwort zugehöriges Paritätszeichen erzeugt, jedes aus dem Arbeitsspeicher ausgelesene Datenwort auf die Richtigkeit seines Paritätszeichens prüft und über eine Steuerleitung bei Auftreten eines Paritätsfehlers eines ausgelesenen Datenwortes an die Zentraleinheit der Datenverarbeitungsanlage ein Fehlersignal abgibt, dadurch gekennzeichnet, daß der das Paritätszeichen abgebende Ausgang (12) des Paritätsgenerators (7) einen Eingang eines EXKLUSIV-ODER-Gliedes (8) ansteuert, dessen anderer Eingang durch eine Torschaltung (9) angesteuert ist, deren zwei Ausgangszustände von der Zentraleinheit (6) im Sinne paritätsrichtigen oder paritätsfalschen Einschreibens in den Arbeitsspeicher (5) ein nicht invertierendes oder ein invertierendes Durchschalten des Paritätszeichens durch das EXKLUSIV-ODER-Glied (8) bewirken.

**Revendications**

1. Procédé pour tester un programme dans les installations de traitement de données, dans lesquelles un programme de système commande le déroulement du programme à tester, le programme à tester, après son chargement dans la mémoire de travail de l'installation de traitement de données, produit, par l'inscription d'une information de sortie avec des signaux de parité exacts dans les cellules de mémoire qu'il doit utiliser, une normalisation de la mémoire de travail et le programme du système provoque en cas d'une erreur de parité l'interruption du programme à tester, caractérisé en ce qu'avant la normalisation sont inscrites au moins dans les cellules de mémoire à utiliser par le programme à tester des informations à signaux de parité faux, de sorte que lorsque le programme est exécuté, un accès pour lecture à l'une de ces cellules de mémoire qui n'est pas normalisée conduit à la constatation d'une erreur de programme.

2. Procédé selon la revendication 1, caractérisé en ce qu'un ordre provoquant le démarrage du programme à tester comporte l'inscription des informations à parité fausse.

3. Procédé selon la revendication 1 pour installations de traitement de données dans lesquelles des zones de mémoire déterminées sont attribuées dynamiquement à un programme et sont libérées à nouveau, caractérisé en ce que la libération dynamique de la zone de mémoire concernée est utilisée comme critère pour l'inscription des informations à parité fausse.

4. Agencement pour un installation de traitement de données pour la mise en oeuvre du procédé selon une des revendications 1 à 3, avec un générateur de parité et un contrôleur de parité qui est monté en amont de la mémoire de travail de l'installation de traitement de données, qui produit un signal de parité attribué à chaque élément de données devant être mis en mémoire dans la mémoire de travail, qui contrôle l'exactitude du signal de parité de chaque élément de données extrait de la mémoire de travail et, par l'intermédiaire d'une ligne de commande, transmet à l'unité centrale de l'installation de traitement de données un signal d'erreur lors de l'apparition d'une erreur de parité d'un élément de données extrait, caractérisé en ce que la sortie (12) du générateur de parité (7) délivrant le signal de parité pilote une entrée d'un élément OU-EXCLUSIF (8) dont l'autre entrée est pilotée par un circuit porte (9), dans lequel deux états de sortie de l'unité centrale (6), produisent, au sens d'une inscription de parité correcte ou de parité fausse dans la mémoire de travail (5), une commutation non inversante ou une commutation inversante du signal de parité par l'intermédiaire de l'élément OU-EXCLUSIF (8).

## Claims

1. A process for checking a program in data processing systems in which a system program controls the execution of the program to be checked, the program to be checked after being loaded into the working memory of the data processing system, causes a normalization of the working memory by writing an initial information with correct parity signs into the memory cells to be used by it, and in which the system program causes the interruption of the program to be checked when a parity error occurs, characterized in that prior to normalizing information having false parity signs is written at least into the memory cells to be used by the program to be checked so that when the program is executed, a reading access to one of said memory cells being not normalized results in the detection of a program error.

2. A process according to claim 1, characterized in that an instruction causing the start of the program to be checked comprises the writing-in of the false parity information.

3. A process according to claim 1 for data processing systems in which certain memory sections are dynamically assigned to a program and released again, characterized in that the dynamic release of the respective memory section is used as criteria for the writing-in of the false parity information.

4. A circuit arrangement for a data processing system to carry out the process according to any one of claims 1 to 3, comprising a parity generator and a parity checker which is arranged before the working memory of the data processing unit, generates a parity sign alotted to each data word to be stored in the working memory, checks each data word read from the working memory for the correctness of its parity sign and supplies an error signal to the central processing unit of the data processing system via a control line when a parity error occurs in a read data word, characterized in that the output (12) of the parity generator (7) supplying the parity sign controls an input of an EXCLUSIVE-OR-device (8), the other input of which is controlled by a gate circuit (9), the two output conditions of which from the central unit (6) cause a non-inverting or an inverting switching-through of the parity sign by the EXCLUSIVE-OR-device (8) in the sense of a parity correct or parity false writing into the working memory (5).

SPEICHER-BITS

| 7 6 5 4 | 3 2 1 0 | P |

ROM / RAM
SYSTEMPROG.

2

RAM
TESTPROG.-SP.

4

11

CPU

SN 74 280
PARIT.-BIT

RAM
ARBEITSSP.

6

7        12

5

10

PARITY

INVPAR

8

E / A
KANAL

9

1

FIG. 1

PARIT.-BIT ⊕ INVPAR = PARITY

| PARIT.-BIT | INVPAR | PARITY |
|:---:|:---:|:---:|
| 1 | 0 | 1 |
| 0 | 0 | 0 |
| 1 | 1 | 0 |
| 0 | 1 | 1 |

FIG. 2

1